(19) Europäisches Patentamt / European Patent Office / Office européen des brevets

(11) **EP 4 404 516 A1**

(12) # EUROPEAN PATENT APPLICATION
published in accordance with Art. 153(4) EPC

(43) Date of publication:
**24.07.2024 Bulletin 2024/30**

(21) Application number: **21958856.3**

(22) Date of filing: **30.09.2021**

(51) International Patent Classification (IPC):
**H04L 27/00** *(2006.01)*

(52) Cooperative Patent Classification (CPC):
**H04L 27/00**

(86) International application number:
**PCT/CN2021/122102**

(87) International publication number:
**WO 2023/050279 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **WANG, Minjuan**
  **Shenzhen, Guangdong 518129 (CN)**
• **RUAN, Wei**
  **Shenzhen, Guangdong 518129 (CN)**

(74) Representative: **Epping - Hermann - Fischer Patentanwaltsgesellschaft mbH**
**Schloßschmidstraße 5**
**80639 München (DE)**

(54) ## METHOD AND APPARATUS FOR DETERMINING FREQUENCY OFFSET

(57) This application provides a method and an apparatus for determining a frequency offset. The method includes: An access point AP receives a first frame sent by a station STA, where the first frame is trigger-based, the first frame includes a plurality of channel estimation training sequence HELTF symbols, the plurality of HELTF symbols include a first HELTF symbol and a second HELTF symbol, and training data on the first HELTF symbol and training data on the second HELTF symbol are the same or opposite. The AP determines a frequency offset value between the AP and the STA based on the first HELTF symbol and the second HELTF symbol. Therefore, the method can improve reliability of determining a frequency offset.

FIG. 4

# Description

## TECHNICAL FIELD

This application relates to the communication field, and more specifically, to a method and an apparatus for determining a frequency offset.

## BACKGROUND

With the development of wireless local area network technologies, technologies such as uplink/downlink multi-user multiple-input multiple-output (multiple-input multiple-output, MIMO), orthogonal frequency-division multiplexing access (orthogonal frequency-division multiplexing access, OFDMA), and spatial multiplexing are introduced, and four protocol frame formats including a single-user frame format, a multi-user frame format, an extended single-user frame format, and a trigger-based (trigger-based, TB) frame format are supported. Information in a TB frame is sent by one or more STAs triggered by an access point (access point, AP). The information in the TB frame may include a frame length of a TB response frame, user spectrum resource (resource unit, RU) allocation, a data modulation scheme, and the like.

A MIMO network or an OFDMA network may be formed between a plurality of stations (or may be referred to as access devices, stations, STAs). However, there are timing offsets and inter-spectrum interference between different STAs, making it difficult for an AP side to demodulate. In existing standards, a TB frame returned by a STA is required to have strict reply time, transmit power, and frequency offset pre-compensation, to ensure that the AP side can correctly receive the TB frame. However, in a long-distance communication scenario, signal attenuation is high, a received signal is more likely to be interfered, and a deviation of a frequency offset pre-compensated by the STA is also large. As a result, a TB frame received by an AP is greatly affected by noise and the frequency offset. Especially for an RU having low communication bandwidth, for example, a 26-tone RU, with powers concentrated in frequency domain and low sensitivity, the RU is more severely affected by noise and the frequency offset.

Therefore, a method for determining a frequency offset is urgently needed, to improve reliability of determining a frequency offset.

## SUMMARY

This application provides a method for determining a frequency offset, to improve reliability of determining a frequency offset.

According to a first aspect, a method for determining a frequency offset is provided. The method may be executed by an access point AP or a chip in an AP. The method includes: An access point AP receives a first frame sent by a station STA, where the first frame is trigger-based, the first frame includes a plurality of channel estimation training sequence HELTF symbols, the plurality of HELTF symbols include a first HELTF symbol and a second HELTF symbol, and training data on the first HELTF symbol and training data on the second HELTF symbol are the same or opposite. The AP determines a frequency offset value between the AP and the STA based on the first HELTF symbol and the second HELTF symbol.

Therefore, in this application, the plurality of HELTF symbols in the trigger-based first frame include the first HELTF symbol and the second HELTF symbol that have same or opposite training data, so that the AP may determine the frequency offset value between the STA and the AP based on the first HELTF symbol and the second HELTF symbol, thereby improving reliability of determining a frequency offset.

With reference to the first aspect, in some implementations of the first aspect, a quantity of the plurality of HELTF symbols is greater than a quantity of spatial streams between the AP and the STA, the plurality of HELTF symbols are further used for determining channel information between the AP and the STA, and the method further includes: The AP determines the channel information based on the plurality of HELTF symbols.

Therefore, in this application, a larger quantity of HELTF symbols than the quantity of spatial streams may be sent, and the AP determines the channel information based on the plurality of HELTF symbols, thereby improving accuracy of determining the channel information.

With reference to the first aspect, in some implementations of the first aspect, periodicities of at least two HELTF symbols among the plurality of HELTF symbols are different.

Therefore, in this application, HELTF symbols with different periodicities may be used based on a requirement of a system on determining of the frequency offset value and the channel information, so that overall sending duration can be reduced.

With reference to the first aspect, in some implementations of the first aspect, the method further includes: The AP determines, based on first information, that the STA needs to send the first frame to the AP, where the first information includes at least one of the following information: a distance between the AP and the STA, a power consumption requirement, a sensitivity requirement, interference strength, a data amount, a modulation order, and a signal-to-noise ratio. The AP sends a trigger frame to the STA, where the trigger frame is used for triggering the STA to send the first frame.

Therefore, in this application, the AP may determine, based on the first information, whether the first frame needs to be sent. If the first frame needs to be sent, the AP sends, to the STA, the trigger frame used for triggering the first frame; otherwise, the STA may send a frame in another form to the AP. This improves flexibility of the system in determining the frequency offset.

With reference to the first aspect, in some implementations of the first aspect, the method further includes: The AP determines, based on second information, power of the plurality of HELTF symbols to be sent, where the trigger frame is further used for indicating the power of the plurality of HELTF symbols to be sent, and the second information includes at least one of the following information: the distance between the AP and the STA, the power consumption requirement, the sensitivity requirement, the interference strength, the data amount, the modulation order, and the signal-to-noise ratio.

Therefore, in this application, the AP may determine, based on the second information, the power of the plurality of HELTF symbols to be sent. This improves the flexibility of the system.

With reference to the first aspect, in some implementations of the first aspect, the method further includes: The AP determines the quantity of the HELTF symbols in the first frame based on third information, where the trigger frame is further used for indicating the quantity of the HELTF symbols, and the third information includes at least one of the following information: the distance between the AP and the STA, the power consumption requirement, the sensitivity requirement, the interference strength, the data amount, the modulation order, and the signal-to-noise ratio. Therefore, in this application, the AP may determine, based on the third information, the quantity of the plurality of HELTF symbols to be sent. This improves the flexibility of the system.

With reference to the first aspect, in some implementations of the first aspect, the method further includes: The AP determines periodicities of the plurality of HELTF symbols based on fourth information, where the trigger frame is further used for indicating the periodicities of the plurality of HELTF symbols, and the fourth information includes at least one of the following information: the distance between the AP and the STA, the power consumption requirement, the sensitivity requirement, the interference strength, the data amount, the modulation order, and the signal-to-noise ratio.

Therefore, in this application, the AP may determine, based on the fourth information, the periodicities of the plurality of HELTF symbols to be sent. This improves the flexibility of the system.

With reference to the first aspect, in some implementations of the first aspect, the trigger frame is further used for indicating at least one of the following information: the periodicities of the plurality of HELTF symbols, the power of the plurality of HELTF symbols, the quantity of the plurality of HELTF symbols, and the quantity of spatial streams. According to a second aspect, a method for determining a frequency offset is provided. The method may be executed by a station STA or a chip in a STA. The method includes: The station STA sends a first frame to an access point AP, where the first frame is trigger-based, the first frame includes a plurality of channel estimation training sequence HELTF symbols, the plurality of HELTF symbols include a first HELTF symbol and a second HELTF symbol, training data on the first HELTF symbol and training data on the second HELTF symbol are the same or opposite, and the first HELTF symbol and the second HELTF symbol are used for determining a frequency offset value between the AP and the STA.

Therefore, in this application, the plurality of HELTF symbols in the trigger-based first frame include the first HELTF symbol and the second HELTF symbol that have same or opposite training data, so that the AP may determine the frequency offset value between the STA and the AP based on the first HELTF symbol and the second HELTF symbol, thereby improving reliability of determining a frequency offset.

With reference to the second aspect, in some implementations of the second aspect, a quantity of the plurality of HELTF symbols is greater than a quantity of spatial streams between the AP and the STA, and the plurality of HELTF symbols are further used for determining channel information between the AP and the STA.

With reference to the second aspect, in some implementations of the second aspect, periodicities of at least two HELTF symbols among the plurality of HELTF symbols are different.

With reference to the second aspect, in some implementations of the second aspect, the method further includes: The STA receives a trigger frame from the AP, where the trigger frame is used for triggering the STA to send the first frame, and the trigger frame is further used for indicating at least one of the following information: periodicities of the plurality of HELTF symbols, power of the plurality of HELTF symbols, the quantity of the plurality of HELTF symbols, and the quantity of spatial streams.

According to a third aspect, an access point is provided. The access point includes a transceiver unit and a processing unit coupled to the transceiver unit. The transceiver unit is configured to receive a first frame sent by a station STA, where the first frame is trigger-based, the first frame includes a plurality of channel estimation training sequence HELTF symbols, the plurality of HELTF symbols include a first HELTF symbol and a second HELTF symbol, and training data on the first HELTF symbol and training data on the second HELTF symbol are the same or opposite. The processing unit is configured to determine a frequency offset value between the AP and the STA based on the first HELTF symbol and the second HELTF symbol.

Therefore, in this application, the plurality of HELTF symbols in the trigger-based first frame include the first HELTF symbol and the second HELTF symbol that have same or opposite training data, so that the AP may determine the frequency offset value between the STA and the AP based on the first HELTF symbol and the second HELTF symbol, thereby improving reliability of determining a frequency offset.

With reference to the third aspect, in some implementations of the third aspect, a quantity of the plurality of HELTF symbols is greater than a quantity of spatial streams between the AP and the STA, the plurality of HELTF symbols are further used for determining channel information between the AP and the STA, and the processing unit is further configured to determine the channel information based on the plurality of HELTF symbols.

With reference to the third aspect, in some implementations of the third aspect, periodicities of at least two HELTF symbols among the plurality of HELTF symbols are different.

With reference to the third aspect, in some implementations of the third aspect, the processing unit is further configured to determine, based on first information, that the STA needs to send the first frame to the AP, where the first information includes at least one of the following information: a distance between the AP and the STA, a power consumption requirement, a sensitivity requirement, interference strength, a data amount, a modulation order, and a signal-to-noise ratio; and the transceiver unit is further configured to send a trigger frame to the STA, where the trigger frame is used for triggering the STA to send the first frame.

With reference to the third aspect, in some implementations of the third aspect, the processing unit is further configured to determine, based on second information, power of the plurality of HELTF symbols to be sent, where the trigger frame is further used for indicating the power of the plurality of HELTF symbols to be sent, and the second information includes at least one of the following information: the distance between the AP and the STA, the power consumption requirement, the sensitivity requirement, the interference strength, the data amount, the modulation order, and the signal-to-noise ratio.

With reference to the third aspect, in some implementations of the third aspect, the processing unit is further configured to determine the quantity of the HELTF symbols in the first frame based on third information, where the trigger frame is further used for indicating the quantity of the HELTF symbols, and the third information includes at least one of the following information: the distance between the AP and the STA, the power consumption requirement, the sensitivity requirement, the interference strength, the data amount, the modulation order, and the signal-to-noise ratio.

With reference to the third aspect, in some implementations of the third aspect, the processing unit is further configured to determine periodicities of the plurality of HELTF symbols based on fourth information, where the trigger frame is further used for indicating the periodicities of the plurality of HELTF symbols, and the fourth information includes at least one of the following information: the distance between the AP and the STA, the power consumption requirement, the sensitivity requirement, the interference strength, the data amount, the modulation order, and the signal-to-noise ratio.

With reference to the third aspect, in some implementations of the third aspect, the trigger frame is further used for indicating at least one of the following information: the periodicities of the plurality of HELTF symbols, the power of the plurality of HELTF symbols, the quantity of the plurality of HELTF symbols, and the quantity of spatial streams. According to a fourth aspect, a station is provided. The station includes a transceiver unit and a processing unit coupled to the transceiver unit. The processing unit is configured to generate a first frame, where the first frame is trigger-based, the first frame includes a plurality of channel estimation training sequence HELTF symbols, the plurality of HELTF symbols include a first HELTF symbol and a second HELTF symbol, training data on the first HELTF symbol and training data on the second HELTF symbol are the same or opposite, and the first HELTF symbol and the second HELTF symbol are used for determining a frequency offset value between an AP and the STA. The transceiver unit is configured to send the first frame to the access point AP.

Therefore, in this application, the plurality of HELTF symbols in the trigger-based first frame include the first HELTF symbol and the second HELTF symbol that have same or opposite training data, so that the AP may determine the frequency offset value between the STA and the AP based on the first HELTF symbol and the second HELTF symbol, thereby improving reliability of determining a frequency offset.

With reference to the fourth aspect, in some implementations of the fourth aspect, a quantity of the plurality of HELTF symbols is greater than a quantity of spatial streams between the AP and the STA, and the plurality of HELTF symbols are further used for determining channel information between the AP and the STA.

With reference to the fourth aspect, in some implementations of the fourth aspect, periodicities of at least two HELTF symbols among the plurality of HELTF symbols are different.

With reference to the fourth aspect, in some implementations of the fourth aspect, the transceiver unit is further configured to receive a trigger frame from the AP, where the trigger frame is used for triggering the STA to send the first frame, and the trigger frame is further used for indicating at least one of the following information: periodicities of the plurality of HELTF symbols, power of the plurality of HELTF symbols, the quantity of the plurality of HELTF symbols, and the quantity of spatial streams.

According to a fifth aspect, a communication apparatus is provided. The apparatus may include a processing unit, a sending unit, and a receiving unit. Optionally, the sending unit and the receiving unit may alternatively be a transceiver unit.

When the apparatus is a STA, the processing unit may be a processor, and the sending unit and the receiving unit may be a transceiver. The apparatus may further include a storage unit. The storage unit may be a memory. The storage unit is configured to store instructions. The processing unit executes the instructions stored in the storage unit, so that the apparatus performs the method according to the first aspect, the third aspect, or the fifth aspect. When the apparatus is a chip in a STA, the processing unit may be a processor, and the sending unit and the receiving unit may be an input/output interface, pins, circuits, or the like. The processing unit executes instructions stored in a storage unit, so that the chip performs the method according to the first aspect. The storage unit is configured to store the instructions. The storage unit may be a storage unit (for example, a register or a cache) in the chip, or a storage unit that is located in the apparatus and outside the chip (for example, a read-only memory or a random access memory).

When the apparatus is an AP, the processing unit may be a processor, and the sending unit and the receiving unit may be a transceiver. The apparatus may further include a storage unit. The storage unit may be a memory. The storage unit is configured to store instructions. The processing unit executes the instructions stored in the storage unit, so that the apparatus performs the method according to the second aspect. When the apparatus is a chip in an AP, the processing unit may be a processor, and the sending unit and the receiving unit may be an input/output interface, pins, circuits, or the like. The processing unit executes the instructions stored in the storage unit, so that the chip performs the method according to the second aspect. The storage unit is configured to store the instructions. The storage unit may be a storage unit (for example, a register or a cache) in the chip, or a storage unit that is located in the apparatus and outside the chip (for example, a read-only memory or a random access memory).

According to a sixth aspect, a communication apparatus is provided, including a processor and an interface circuit. The interface circuit is configured to receive a signal from another communication apparatus different from the communication apparatus and transmit the signal to the processor, or send a signal from the processor to another communication apparatus different from the communication apparatus. The processor is configured to implement the method according to any one of the possible implementations of the first aspect and the second aspect through a logic circuit or by executing code instructions.

According to a seventh aspect, a computer-readable storage medium is provided. The computer-readable storage medium stores a computer program or instructions. When the computer program or instructions are executed, the method according to any one of the possible implementations of the first aspect and the second aspect is implemented. According to an eighth aspect, a computer program product including instructions is provided. When the instructions are run, the method according to any one of the possible implementations of the first aspect and the second aspect is implemented.

According to a ninth aspect, a computer program is provided. The computer program includes code or instructions. When the code or the instructions are run, the method according to any one of the possible implementations of the first aspect and the second aspect is implemented.

According to a tenth aspect, a chip system is provided. The chip system includes a processor, and may further include a memory, to implement the method according to any one of the possible implementations of the first aspect and the second aspect. The chip system may include a chip, or may include a chip and another discrete device.

According to an eleventh aspect, a communication system is provided. The system includes the apparatus according to the third aspect and the apparatus according to the fourth aspect.

## BRIEF DESCRIPTION OF DRAWINGS

FIG. 1 is a schematic diagram of a communication system to which embodiments of this application are applicable;
FIG. 2 is a schematic diagram of sending data to an AP by two STAs according to an embodiment of this application;
FIG. 3 is a schematic diagram of a structure of a TB frame;
FIG. 4 is a schematic flowchart of a method for determining a frequency offset according to an embodiment of this application;
FIG. 5 is a schematic diagram of a structure of a TB frame according to an embodiment of this application;
FIG. 6 is a schematic diagram of a structure of another TB frame according to an embodiment of this application;
FIG. 7 is a schematic diagram of a structure of an apparatus for determining a frequency offset, which is used in an AP, according to an embodiment of this application; and
FIG. 8 is a schematic diagram of a structure of an apparatus for determining a frequency offset, which is used in a STA, according to an embodiment of this application.

## DESCRIPTION OF EMBODIMENTS

The following describes technical solutions of this application with reference to the accompanying drawings. Embodiments of this application may be applied to a wireless local area network (wireless local area network, WLAN). At present, Institute of Electrical and Electronics Engineers (institute of electrical and electronics engineer, IEEE) 802.11 series standards are used for WLANs. The WLAN may include a plurality of basic service sets (basic service sets, BSSs). Network nodes in the BSS include a station (station, STA) and an access point (access point, AP). Each BSS may include one AP and a plurality of STAs associated with the AP.

The AP in embodiments of this application may also be referred to as a wireless access point, a hotspot, or the like. The AP is an access point used by a mobile user to access a wired network, and is mainly deployed in a home, inside a building, or inside a campus, with a typical coverage radius of tens of meters to hundreds of meters. Certainly, the AP may alternatively be deployed outdoors. The AP is equivalent to a bridge that connects a wired network and a wireless network. A main function of the AP is to connect wireless network clients together, and then connect the wireless network to the Ethernet. Specifically, the AP may be a device that supports an 802.11ax standard. Further, optionally, the AP may be a device that supports a plurality of WLAN standards, such as 802.11ac, 802.11n, 802.11g, 802.1 1b, 802.11a, and later versions.

The STA in embodiments of this application may be a wireless communication chip, a wireless sensor, or a wireless communication terminal, for example, a mobile phone supporting a Wi-Fi communication function, a tablet computer supporting a Wi-Fi communication function, a set top box supporting a Wi-Fi communication function, a smart television supporting a Wi-Fi communication function, a smart wearable device supporting a Wi-Fi communication function, an in-vehicle communication device supporting a Wi-Fi communication function, or a computer supporting a Wi-Fi communication function. Optionally, the STA may support an 802.11ax standard. Further, optionally, the STA may support a plurality of WLAN standards, such as 802.11ac, 802.11n, 802.11g, 802.11b, 802.11a, and later versions. In embodiments of this application, the STA or the AP includes a hardware layer, an operating system layer that is run on top of the hardware layer, and an application layer that is run on the operating system layer. The hardware layer includes hardware such as a central processing unit (central processing unit, CPU), a memory management unit (memory management unit, MMU), and an internal memory (or referred to as a main memory). The operating system may be any one or more types of computer operating systems that implement service processing through processes (processes), for example, a Linux operating system, a Unix operating system, an Android operating system, an iOS operating system, or a Windows operating system. The application layer includes applications such as a browser, an address book, word processing software, and instant messaging software. In addition, a specific structure of an entity for performing a method provided in embodiments of this application is not particularly limited in embodiments of this application, provided that the entity can run a program that records code of the method provided in embodiments of this application to perform communication according to the method provided in embodiments of this application. For example, the entity for performing the method provided in embodiments of this application may be a STA, an AP, or a functional module that is in a STA or an AP and that can call and execute a program.

In embodiments of this application, a wireless local area network system may support a trigger-based TB frame format.

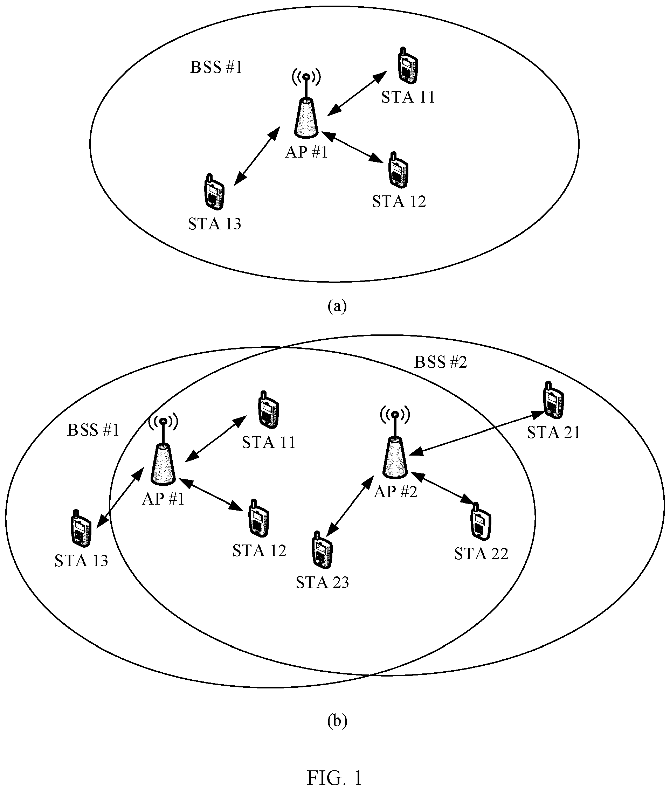

FIG. 1 is a schematic diagram of a network architecture of a wireless local area network to which embodiments of this application are applicable. As shown in (a) in FIG. 1, one BSS may include one AP and one or more STAs associated with the AP. The network architecture of the wireless local area network may alternatively include a plurality of BSSs. For example, as shown in (b) in FIG. 1, two BSSs are shown. The two BSSs partially overlap. In other words, the two BSSs are OBSSs. A BSS #1 includes an AP #1, a STA 11, a STA 12, and a STA 13, and a BSS #2 includes an AP #2, a STA 21, a STA 22, and a STA 23. The STA 11, the STA 12, the STA 22, and the STA 23 are an overlapping part of the two BSSs. Each BSS includes an AP and a plurality of STAs. Within each BSS, data may be transmitted between the AP and each STA. The AP #1 and the AP #2 may also communicate with each other.

It should be understood that FIG. 1 is merely an example and should not constitute a limitation on the network architecture of the wireless local area network to which this application is applicable. For example, the network architecture may alternatively include more BSSs, each BSS may alternatively include more STAs, or some BSSs may alternatively not include an AP. An overlapping area of a plurality of BSSs may alternatively include more STAs, and the like. This is not limited in embodiments of this application.

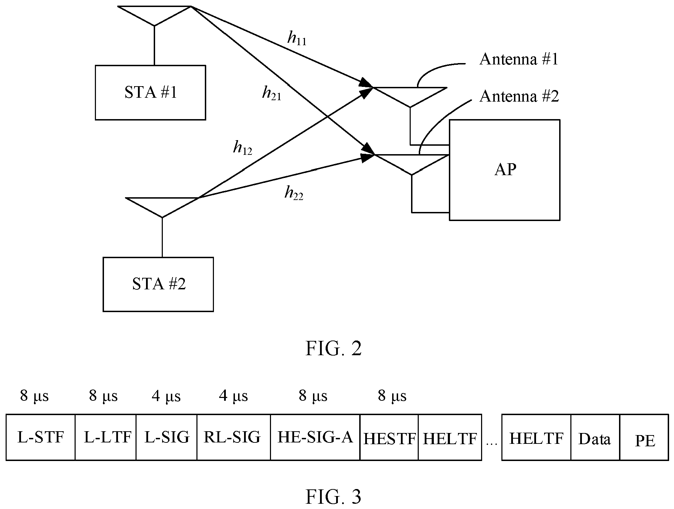

First, uplink transmission from a plurality of STAs to an AP is described is used as an example with reference to FIG. 2. FIG. 2 is a schematic diagram of sending data to an AP by two STAs according to an embodiment of this application;

FIG. 2 shows two STAs (a STA #1 and a STA #2 shown in FIG. 2) and one AP. The STA #1 and the STA #2 may access a network through the AP. Two antennas (an antenna #1 and an antenna #2 shown in FIG. 2) are deployed on the AP. One antenna is deployed on each of the STA # 1 and the STA #2. Channels from the STA # 1 to the antenna # 1 and the antenna #2 of the AP include h11 and h12, and channels from the STA #2 to the antenna #1 and the antenna #2 of the AP include h21 and h22.

In this application, a plurality of signals are sent through radio at a same time, and each signal is a spatial stream. The AP sends spatial streams through the antennas thereof, and spatial streams reach STAs through different paths. A wireless system can send and receive spatial streams and distinguish signals that are to be sent to or from different spatial orientations. In a MIMO system, data at receive antennas and transmit antennas is divided into a plurality of independent spatial streams, and a quantity of the spatial streams is generally less than or equal to a quantity of antennas. If a quantity of receive antennas is not equal to a quantity of transmit antennas, the quantity of spatial streams is equal to or less than the smaller one of the quantity of receive antennas and the quantity of transmit antennas.

In a system including a plurality of STAs, for example, in the system shown in FIG. 2, there is a timing offset and inter-spectrum interference between the STA #1 and the STA #2, which may affect demodulation on the AP side. In existing standards, for a TB frame protocol, a TB frame returned by a STA is required to have strict reply time, transmit power, and frequency offset pre-compensation, to ensure the AP side can correctly receive the TB frame.

802.11ax is used as an example. FIG. 3 is a schematic diagram of a structure of a TB frame format. The TB frame may be carried in a physical protocol data unit (physical protocol data unit, PPDU) sent by a STA to an AP. The TB frame includes the following fields: L-STF representing a non-high throughput short training field (non-high throughput short training field), L-LTF representing a non-high throughput long training field (non-high throughput long training field), L-SIG representing a non-high throughput signal field (non-high throughput signal field), RL-SIG representing a repetition non-high throughput signal field (repetition non-high throughput signal field), HE-SIG-A representing a high efficiency signal field A (high efficiency signal field A), HE-SIG-B representing a high efficiency signal field B (high efficiency signal field B), HESTF representing a high-efficiency short training field (high-efficiency short training field, HESTF), HELTF representing a high-efficiency long training field (high-efficiency long training field, HELTF), Data representing a data field, and PE representing a packet extension field (package extension field).

When receiving the TB frame, the AP may perform timing synchronization and frequency offset estimation based on known preamble information. For example, the AP may perform timing synchronization and initial frequency offset estimation based on the L-STF and the L-LTF, and then perform further frequency offset estimation based on preamble signaling symbols L-SIG, RL-SIG, and HE-SIG-A. Therefore, even if the TB frame sent by the STA has not been subjected to frequency offset pre-compensation, the AP may actively perform frequency offset estimation based on a preamble part to correct a frequency offset, to reduce impact caused by the frequency offset on channel estimation and a data part.

Such a manner of actively performing frequency offset estimation based on the preamble part requires power of symbols such as L-STF, L-LTF, L-SIG, RL-SIG, and HE-SIG-A to meet a specific sensitivity requirement. However, for an RU having low communication bandwidth, for example, a TB RU 26 (26-tone), powers are concentrated in frequency domain. The TB RU 26 has a 9.7 dB power enhancement compared with the preamble part. Therefore, if power of the TB frame is close to a bandwidth sensitivity of the TB RU 26, the AP may fail in detecting existence of a preamble symbol, and consequently cannot perform frequency offset estimation based on preamble information, and cannot reliably obtain data information.

Therefore, a method for determining a frequency offset is urgently needed, to improve reliability of determining a frequency offset.

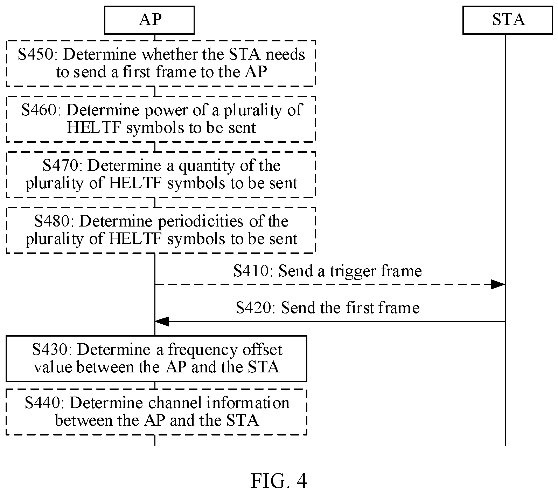

FIG. 4 is a schematic flowchart of a method 400 for channel estimation according to this application.

Embodiments of this application are applicable to a 2 spatial stream (spatial stream, ss) system (for example, the system shown in FIG. 2), and are also applicable to a 1 ss system to a 4 ss system. With development of technologies, the technical solutions provided in embodiments of this application may also be applicable to a system with more spatial streams.

S410: An AP sends a trigger frame to a STA, and correspondingly, the STA receives the trigger frame from the AP. The trigger frame is used for triggering the STA to send a first frame to the AP. The first frame includes plurality of HELTF symbols. The plurality of HELTF symbols include a first HELTF symbol and a second HELTF symbol. Training data on the first HELTF symbol and training data on the second HELTF symbol are the same or opposite. The first frame may be a trigger-based TB frame in an HE TB PPDU format.

A frequency offset value between the AP and the STA may also be referred to as a frequency difference or a frequency difference value.

S420: The STA sends the first frame to the AP, and correspondingly, the AP receives the first frame sent by the STA. It should be noted that training data on the plurality of HELTF symbols sent by the STA may form a training matrix, a quantity of columns in the training matrix is equal to a quantity of the plurality of HELTF symbols, and a quantity of rows in the training matrix corresponds to a quantity of spatial streams between the AP and the STA. An element in the training data is training data sent by a symbol on a spatial stream. For example, an element in row 1 and column 2 in the training matrix may represent training data sent by the second symbol on the first spatial stream.

In addition, the AP receives the plurality of HELTF symbols, and may generate an information matrix. Elements of the information matrix are determined by training data, information about a channel for sending the training data, and the frequency offset value between the AP and the STA.

When the system has a plurality of spatial streams, the training data is separately multiplied with the elements in the training matrix to generate the plurality of HELTF symbols. That the training data on the first HELTF symbol and the training data on the second HELTF symbol are the same or opposite may be understood as that a plurality of pieces of training data on the first HELTF symbol and a plurality of pieces of training data on the second HELTF symbol are the same or opposite to each other. For example, assuming that the system includes two spatial streams, that training data on the first symbol and training data on the third symbol is the same or opposite to means that training data sent by the first spatial stream on the first symbol and training data sent by the first spatial stream on the third symbol are the same or opposite to each other, and training data sent by the second spatial stream on the first symbol and training data sent by the second spatial stream on the third symbol are also the same or opposite to each other.

It should be noted that, that the plurality of HELTF symbols include the first HELTF symbol and the second HELTF symbol that have same or opposite training data may be understood as that training data on at least two HELTF symbols among the plurality of HELTF symbols is the same or opposite. In other words, at least two columns of arrays in the training matrix formed by the training data are the same or opposite.

The following respectively describes two configuration manners of the HELTF symbols.

Manner 1:

A P matrix #1 with 4 rows and 4 columns is configured as:

$$P_{4\times4} = \begin{bmatrix} 1 & -1 & 1 & 1 \\ 1 & 1 & -1 & 1 \\ 1 & 1 & 1 & -1 \\ -1 & 1 & 1 & 1 \end{bmatrix}$$

A P matrix #2 with 8 rows and 8 columns is configured as:

$$P_{8\times8} = \begin{bmatrix} P_{4\times4} & P_{4\times4} \\ P_{4\times4} & -P_{4\times4} \end{bmatrix}$$

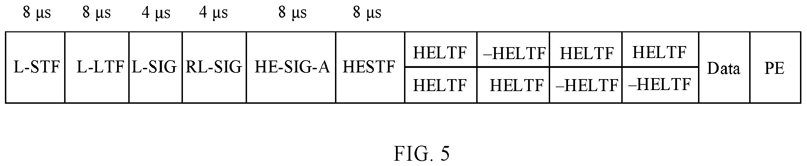

Assuming that the quantity of spatial streams in the system is 2, a training matrix # 1 formed by the plurality of HELTF symbols sent by the STA may be the first two rows of the P matrix #1. If the first frame is a TB frame, refer to FIG. 5. FIG. 5 is a schematic diagram of a structure of a TB frame.

To be specific, the STA may send four training data sets, namely, $[1,1]^T$, $[-1,1]^T$, $[1,-1]^T$, and $[1,1]^T$, on four symbols. The training data set $[1,1]^T$ on the first HELTF symbol is the same as the training data set $[1,1]^T$ on the fourth HELTF symbol, and the training data set $[-1,1]^T$ on the second HELTF symbol is opposite to the training data set $[1,-1]^T$ on the third HELTF symbol.

Manner 2:

A P matrix #3 with 2 rows and 2 columns is configured as:

$$P_{2\times2} = \begin{bmatrix} 1 & -1 \\ 1 & 1 \end{bmatrix}$$

A P matrix #4 with 3 rows and 3 columns is configured as:

$$P_{3\times3} = \begin{bmatrix} 1 & -1 & 1 \\ 1 & 1 & -1 \\ -1 & 1 & 1 \end{bmatrix}$$

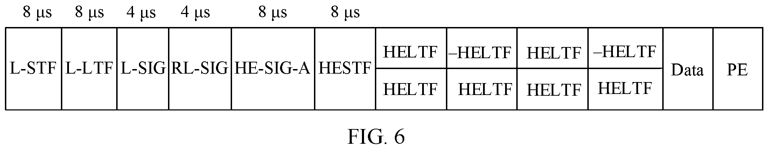

Assuming that the quantity of spatial streams in the system is 2, the training matrix formed by the plurality of HELTF symbol sets sent by the STA may be formed by two P matrices #3 side by side. If the first frame is a TB frame, refer to FIG. 6. FIG. 6 is a schematic diagram of a structure of a TB frame. To be specific, the STA may send four training data sets, namely, $[1,1]^T$, $[-1,1]^T$, $[1,1]^T$, and $[-1,1]^T$, on four symbols. The training data set $[1,1]^T$ on the first symbol is the same as the training data set $[1,1]^T$ on the third symbol. Similarly, if the quantity of spatial streams is 3, the training matrix formed by the training data sets sent by the STA may be formed by two P matrices #4 side by side. It should be noted that the foregoing is merely an example of repeating the P matrix twice, and a quantity of repetitions of the P matrix may not be limited in this application.

In a possible implementation, periodicities of at least two HELTF symbols among the plurality of HELTF symbols are different.

HELTF symbols with same training data may be used for determining the frequency offset value between the AP and the STA, and different periodicities may be configured for different HELTF symbols based on a requirement of the system on determining of the offset value.

Optionally, periodicities of an equal quantity of HELTF symbols to the quantity of spatial streams of training data that can form a full rank matrix are configured to be longer than periodicities of other HELTF symbols.

For example, assuming that the system where the quantity of spatial streams is 2 configures the HELTF symbols based on Manner 1 described above, periodicities of the first HELTF symbol and the second symbol may be configured to be longer than periodicities of the third HELTF symbol and the fourth symbol. For example, the periodicities of the first HELTF symbol and the second HELTF symbol are 16 $\mu$s, and the periodicities of the third HELTF symbol and the fourth HELTF symbol are 4.8 $\mu$s.

For example, assuming that the system where the quantity of spatial streams is 2 configures the HELTF symbols based on Manner 2 described above, periodicities of the first and second HELTF symbols may be configured to be longer than periodicities of the third and fourth HELTF symbols, or periodicities of the third and fourth HELTF symbols may be configured to be longer than periodicities of the first and second HELTF symbols.

Optionally, periodicities of HELTF symbols with same training data are configured to be longer than periodicities of other HELTF symbols.

For example, assuming that the system where the quantity of spatial streams is 2 configures the HELTF symbols based on Manner 1 described above, periodicities of the first HELTF symbol and the fourth symbol may be configured to be longer than periodicities of the second HELTF symbol and the third symbol. For example, the periodicities of the first HELTF symbol and the fourth HELTF symbol are 16 $\mu$s, and the periodicities of the second HELTF symbol and the third HELTF symbol are 4.8 $\mu$s.

For another example, assuming that the system where the quantity of spatial streams is 2 configures the HELTF symbols based on Manner 2 described above, periodicities of the first and third HELTF symbols may be configured to be longer than periodicities of the second and fourth HELTF symbols, or periodicities of the second and fourth HELTF symbols may be configured to be longer than periodicities of the first and third HELTF symbols.

It should be noted that the foregoing examples of the periodicities of the HELTF symbols are described by way of example only. In this application, HELTF symbols with different periodicities may be used based on a requirement of a system on determining of the frequency offset value and the channel information, so that overall sending duration can be reduced.

S430: The AP determines the frequency offset value based on the plurality of HELTF symbols.

For example, the AP may perform conjugate multiplication of training data on at least two HELTF symbols with same training data to obtain a phase value, and then determine the frequency offset value between the AP and the STA based on the phase value and the periodicities of the HELTF symbols.

For another example, for HELTF symbols with opposite training data, the AP may negate the training data on one of the HELTF symbols, perform conjugate multiplication of the negated training data and the training data on another HELTF symbol to obtain a phase value, and then determine the frequency offset value between the AP and the STA based on the phase value and the periodicities of the HELTF symbols.

In a possible implementation, the quantity of the plurality of HELTF symbols in the first frame is greater than the quantity of spatial streams between the AP and the STA, and the method further includes step S440.

S440: The AP determines channel information between the AP and the STA based on the plurality of HELTF symbols. The following describes a method for determining the offset value and the channel information between the AP and the STA with reference to the foregoing two configuration manners, that is, Manner 1 and Manner 2.

Assuming that the system where the quantity of spatial streams is 2 configures the HELTF symbols based on Manner 1 described above, an information matrix #1 received by the AP may be expressed as a form of multiplying a channel matrix H by the training matrix.

$$\begin{bmatrix} h_{11} & h_{12} \\ h_{21} & h_{22} \end{bmatrix} \begin{bmatrix} 1 & -1 & 1 & 1 \\ 1 & 1 & -1 & 1 \end{bmatrix}$$

The information matrix #1 is obtained by multiplying the channel matrix H by the training matrix #1, and is a matrix with 2 rows and 4 columns. The AP performs conjugate multiplication of the first column and the fourth column in the information matrix #1 to obtain a phase value, and then determines the frequency offset value between the AP and the STA based on the phase value and periodicities of the symbols. In addition, the AP may process the information matrix #1. For example, the AP averages the first column and the fourth column in the information matrix #1 to obtain a column of data sets, negates the third column in the information matrix #1, and then averages the negated third column and the second column to obtain another column of data sets. The two columns of data sets obtained may form a new channel matrix. Similarly, the AP averages the first column and the fourth column in the training matrix #1 to obtain $[1,1]^T$, negates the third column in the information matrix #1, and then averages the negated third column and the second column to obtain $[-1,1]^T$. The two columns of data sets obtained may form a new training matrix. A channel matrix may be obtained by multiplying the new channel matrix and an inverse matrix of the new training matrix, so that the channel information between the AP and the STA may be obtained.

Assuming that the system where the quantity of spatial streams is 2 configures the HELTF symbols based on Manner 2 described above, an information matrix #2 received by the AP may be expressed as:

$$\begin{bmatrix} h_{11} & h_{12} \\ h_{21} & h_{22} \end{bmatrix} \begin{bmatrix} 1 & -1 & 1 & -1 \\ 1 & 1 & 1 & 1 \end{bmatrix}$$

The information matrix #2 is obtained by multiplying the channel matrix H by the training matrix #2, and is a matrix with 2 rows and 4 columns. The AP performs conjugate multiplication of the first column and the third column or conjugate multiplication on the second column and the fourth column in the information matrix #2 to obtain a phase value, and then determines the frequency offset value between the AP and the STA based on the phase value and periodicities of the symbols. In addition, the AP may process the information matrix #2. For example, the AP averages the first column and the third column in the information matrix #2 to obtain a column of data sets, and averages the second column and the fourth column in the information matrix #2 to obtain another column of data sets. The two columns of data sets obtained may form a new channel matrix. A channel matrix may be obtained by multiplying the new channel matrix by an inverse matrix of the P matrix #3. In other words, the channel information between the AP and the STA is obtained.

It should be noted that the quantity of spatial streams of 2 in the foregoing description is merely an example, and this application is not limited thereto. In this application, a P matrix may be pre-configured, and then some parameters in the P matrix are selected (for example, based on Manner 1) to form a training matrix, or the P matrix is repeated (for example, based on Manner 2) to form a training matrix, so that at least two columns of column vectors in the training matrix are the same or opposite.

In addition, to determine the channel information between the AP and the STA based on the training matrix composed of the plurality of HELTF symbols, a quantity of symbols for sending the training data sets is greater than or equal to the quantity of spatial streams, in other words, a quantity of columns in the training matrix needs to be greater than or equal to a quantity of rows in the training matrix. Therefore, a quantity of columns in an information matrix obtained based on the training matrix is greater than or equal to a quantity of rows in the information matrix. In this case, the training matrix and the information matrix may be processed to obtain a new full rank training matrix and a new full rank information matrix each having a quantity of rows equal to a quantity of columns. For example, column vectors corresponding to symbols for sending same data are averaged to obtain a new column of column vectors. One column of column vectors corresponding to symbols for sending opposite data is negated, and the negated column of column vectors and another column of column vectors are averaged to obtain a new column of column vectors. Then, the channel information between the AP and the STA is determined based on the processed training matrix and the processed information matrix.

In a possible implementation, before step S410, the method 400 may further include step S450.

S450: The AP determines, based on first information, whether the STA needs to send the first frame to the AP.

The first information may include at least one of the following information: a distance between the AP and the STA, a power consumption requirement, a sensitivity requirement, interference strength, a data amount, a modulation order, and a signal-to-noise ratio.

For example, when the AP is at a long distance from the STA, the AP may determine that the STA needs to send the first frame to the AP. When the AP is at a short distance from the STA, the AP may determine that the STA does not need to send the first frame to the AP, and the STA may send, to the AP, a frame in another format and used for determining the frequency offset value.

For another example, when a sensitivity requirement of the system is within a predetermined range, the AP may determine that the STA needs to send the first frame to the AP; otherwise, the AP may determine that the STA does not need to send the first frame to the AP, and the STA may send, to the AP, a frame in another format and used for determining the frequency offset value.

For another example, when interference strength of an environment between the AP and the STA is high, the AP may determine that the STA needs to send the first frame to the AP; otherwise, the AP may determine that the STA does not need to send the first frame to the AP, and the STA may send, to the AP, a frame in another format and used for determining the frequency offset value.

For another example, in a case of a small data amount (for example, an RU) and/or a small modulation order, the AP may determine that the STA needs to send the first frame to the AP; otherwise, the AP may determine that the STA does not need to send the first frame to the AP, and the STA may send, to the AP, a frame in another format and used for determining the frequency offset value.

In step S410, when the AP determines that the STA needs to send the first frame to the AP, the AP sends, to the STA, the trigger frame used for triggering the first frame.

If the first frame is a TB frame, the trigger frame may be carried in a trigger frame (trigger) for scheduling the TB frame. For example, at least one bit may be added to the trigger frame, or an existing bit may be reused to indicate whether the first frame proposed in this application needs to be sent.

In a possible implementation, the trigger frame is further used for indicating at least one of the following information: the periodicities of the plurality of HELTF symbols, the power of the plurality of HELTF symbols, the quantity of the plurality of HELTF symbols, and the quantity of spatial streams.

The periodicities of the plurality of HELTF symbols, the power of the plurality of HELTF symbols, and the quantity of the plurality of HELTF symbols may be pre-configured by the system, or may be determined by the AP based on related information. For a determining manner, refer to the following description.

In a possible implementation, before step S410, the method 400 may further include step S460.

S460: The AP determines, based on second information, the power of the plurality of HELTF symbols to be sent, where the trigger frame is further used for indicating the power of the plurality of HELTF symbols.

The second information may include at least one of the following information: the distance between the AP and the STA, the power consumption requirement, the sensitivity requirement, the interference strength, the data amount, the modulation order, and the signal-to-noise ratio.

For example, when the AP is at a long distance from the STA, the AP may properly increase the power of the plurality of HELTF symbols to be sent. For example, the AP may indicate, through the trigger frame, power values of the plurality of HELTF symbols to be sent, or may indicate that the power of the plurality of HELTF symbols is doubled. This is not particularly limited in this application.

In a possible implementation, before step S410, the method 400 may further include step S470.

S470: The AP determines the quantity of the plurality of HELTF symbols based on third information, where the trigger frame is further used for indicating the quantity of the plurality of HELTF symbols.

The third information may include at least one of the following information: the distance between the AP and the STA, the power consumption requirement, the sensitivity requirement, the interference strength, the data amount, the modulation order, and the signal-to-noise ratio.

For example, when the AP is at a long distance from the STA, the AP may properly increase the quantity of the plurality of HELTF symbols. For example, if the configuration manner of repeating the P matrix is used based on Manner 2, the AP may increase a quantity of repetitions of the P matrix. That the trigger frame is further used for indicating the quantity of the plurality of HELTF symbols may also be understood as that the trigger frame indicates the quantity of repetitions of the P matrix. This is not particularly limited in this application.

S480: The AP determines the periodicities of the plurality of HELTF symbols based on fourth information, where the trigger frame is further used for indicating the periodicities of the plurality of HELTF symbols.

The fourth information may include at least one of the following information: the distance between the AP and the STA, the power consumption requirement, the sensitivity requirement, the interference strength, the data amount, the modulation order, and the signal-to-noise ratio.

The periodicities of the plurality of HELTF symbols may be the same or may be different. The AP may determine the periodicity of each HELTF symbol based on the fourth information or a requirement of the system on determining of the offset value or the channel information. Refer to the foregoing descriptions for details. For brevity, details are not described herein again.

Therefore, in this application, training data on at least two HELTF symbols among the plurality of HELTF symbols in the first frame triggered by the trigger frame is the same or opposite, so that the AP may determine the frequency offset value between the STA and the AP based on the plurality of HELTF symbols, thereby improving reliability of determining the frequency offset.

The foregoing describes the method for determining a frequency offset in embodiments of this application. The following describes an apparatus for determining a frequency offset in embodiments of this application. The apparatus for determining a frequency offset in embodiments of this application includes an apparatus for determining a frequency offset, which is used in a STA, and an apparatus for determining a frequency offset, which is used in an AP. It should be understood that the apparatus for determining a frequency offset that is used in a STA is the STA in the foregoing method and has any function of the STA in the foregoing method, and the apparatus for determining a frequency offset that is used in an AP is the AP in the foregoing method and has any function of the AP in the foregoing method.

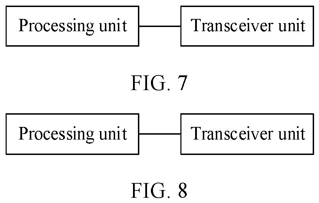

As shown in FIG. 7, the apparatus is used in an access point and includes a transceiver unit and a processing unit. The transceiver unit is configured to receive a first frame sent by a station STA, where the first frame is trigger-based, the first frame includes a plurality of channel estimation training sequence HELTF symbols, the plurality of HELTF symbols include a first HELTF symbol and a second HELTF symbol, and training data on the first HELTF symbol and training data on the second HELTF symbol are the same or opposite. The processing unit is configured to determine a frequency offset value between the AP and the STA based on the first HELTF symbol and the second HELTF symbol.

The apparatus for determining a frequency offset that is used in an AP in embodiments of this application is the AP in the foregoing method and has any function of the AP in the foregoing method. Refer to the foregoing method for details, which are not described herein again.

As shown in FIG. 8, an apparatus for determining a frequency offset includes a transceiver unit and a processing unit. The processing unit is configured to generate a first frame, where the first frame is trigger-based, the first frame includes a plurality of channel estimation training sequence HELTF symbols, the plurality of HELTF symbols include a first HELTF symbol and a second HELTF symbol, training data on the first HELTF symbol and training data on the second HELTF symbol are the same or opposite, and the first HELTF symbol and the second HELTF symbol are used for determining a frequency offset value between an AP and a STA. The transceiver unit is configured to send the first frame to the access point AP.

The apparatus for determining a frequency offset that is used in a STA in embodiments of this application is the STA in the foregoing method and has any function of the STA in the foregoing method. Refer to the foregoing method for details, which are not described herein again.

The foregoing describes the apparatus for determining a frequency offset that is used in a STA and the apparatus for determining a frequency offset that is used in an AP in embodiments of this application. The following describes possible product forms of the apparatus for determining a frequency offset that is used in a STA and the apparatus for determining a frequency offset that is used in an AP. It should be understood that any form of product having the feature of the apparatus for determining a frequency offset that is used in an AP in FIG. 7 and any form of product having the feature of the apparatus for determining a frequency offset that is used in a STA in FIG. 8 fall within the protection scope of this application. It should also be understood that the following description is merely an example, and does not limit product forms of the apparatus for determining a frequency offset that is used in a STA and product forms of the apparatus for determining a frequency offset that is used in an AP in embodiments of this application. As a possible product form, the apparatus for determining a frequency offset that is used in a STA and the apparatus for determining a frequency offset that is used in an AP in embodiments of this application may be implemented through a general bus architecture.

The apparatus for determining a frequency offset that is used in a STA includes a processor and a transceiver in communication connection with inside of the processor. The processor is configured to generate a first frame, where the first frame includes a plurality of channel estimation training sequence HELTF symbols, training data on at least two HELTF symbols among the plurality of HELTF symbols is the same or opposite, and the plurality of HELTF symbols are used for determining a frequency offset value between an AP and the STA. The transceiver is configured to send the first frame.

The apparatus for determining a frequency offset that is used in an AP includes a processor and a transceiver in communication connection with inside of the processor. The transceiver is configured to receive a first frame sent by a station STA, where the first frame is trigger-based, the first frame includes a plurality of channel estimation training sequence HELTF symbols, the plurality of HELTF symbols include a first HELTF symbol and a second HELTF symbol, and training data on the first HELTF symbol and training data on the second HELTF symbol are the same or opposite. The processor is configured to determine a frequency offset value between the AP and the STA based on the first HELTF symbol and the second HELTF symbol.

As a possible product form, the apparatus for determining a frequency offset that is used in a STA and the apparatus for determining a frequency offset that is used in an AP in embodiments of this application may be implemented through a general-purpose processor.

The general-purpose processor for implementing the apparatus for determining a frequency offset that is used in an AP includes a processing circuit and an input/output interface in communication connection with inside of the processing circuit. The input/output interface is configured to receive a first frame sent by a station STA, where the first frame is trigger-based, the first frame includes a plurality of channel estimation training sequence HELTF symbols, the plurality of HELTF symbols include a first HELTF symbol and a second HELTF symbol, and training data on the first HELTF symbol and training data on the second HELTF symbol are the same or opposite. The processing circuit is configured to determine a frequency offset value between the AP and the STA based on the first HELTF symbol and the second HELTF symbol. Optionally, the general-purpose processor may further include a storage medium, and the storage medium is configured to store instructions to be executed by the processing circuit.

The general-purpose processor for implementing the apparatus for determining a frequency offset that is used in a STA includes a processing circuit and an input/output interface in communication connection with inside of the processing circuit. The input/output interface is configured to receive a trigger frame sent by an access point AP, where the trigger frame is used for triggering the STA to send a first frame to the AP. The processing circuit is configured to generate the first frame, where the first frame is trigger-based, the first frame includes a plurality of channel estimation training sequence HELTF symbols, the plurality of HELTF symbols include a first HELTF symbol and a second HELTF symbol, training data on the first HELTF symbol and training data on the second HELTF symbol are the same or opposite, and the first HELTF symbol and the second HELTF symbol are used for determining a frequency offset value between the AP and the STA. Optionally, the general-purpose processor may further include a storage medium, and the storage medium is configured to store instructions to be executed by the processing circuit.

As a possible product form, the apparatus for determining a frequency offset that is used in a STA and the apparatus for determining a frequency offset that is used in an AP in embodiments of this application may alternatively be implemented through the following: one or more FPGAs (field programmable gate arrays), a PLD (programmable logic device), a controller, a state machine, gate logic, a discrete hardware component, any other suitable circuit, or any combination of circuits that can perform various functions described in this application.

It should be understood that the foregoing various product forms of the apparatus for determining a frequency offset that is used in a STA and the apparatus for determining a frequency offset that is used in an AP respectively have any function of the STA and the AP in the foregoing method embodiments, and details are not described herein again.

It should be understood that the term "and/or" in this specification describes only an association relationship between associated objects and indicates that three relationships may exist. For example, A and/or B may indicate the following three cases: Only A exists, both A and B exist, and only B exists. In addition, the character "/" in this specification usually indicates an "or" relationship between associated objects.

A person of ordinary skill in the art may be aware that, in combination with the examples described in embodiments disclosed in this specification, method steps and units may be implemented by electronic hardware, computer software, or a combination thereof. To clearly describe the interchangeability between hardware and software, the foregoing has generally described steps and compositions of the embodiments based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections using some interfaces, apparatuses, or units, and may also be electronic, mechanical, or other forms of connections.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to conventional technologies, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any modification or replacement readily conceived by a person skilled in the art within the technical scope disclosed in this application shall fall within the protection scope of this application. Therefore, the protection scope of this application shall be subject to the protection scope of the claims.

## Claims

1. A method for determining a frequency offset, comprising:

   receiving, by an access point AP, a first frame sent by a station STA, wherein the first frame is trigger-based, the first frame comprises a plurality of channel estimation training sequence HELTF symbols, the plurality of HELTF symbols comprise a first HELTF symbol and a second HELTF symbol, and training data on the first HELTF symbol and training data on the second HELTF symbol are the same or opposite; and
   determining, by the AP, a frequency offset value between the AP and the STA based on the first HELTF symbol and the second HELTF symbol.

2. The method according to claim 1, wherein a quantity of the plurality of HELTF symbols is greater than a quantity of spatial streams between the AP and the STA, the plurality of HELTF symbols are further used for determining channel information between the AP and the STA, and the method further comprises:
   determining, by the AP, the channel information based on the plurality of HELTF symbols.

3. The method according to claim 1 or 2, wherein periodicities of at least two HELTF symbols among the plurality of HELTF symbols are different.

4. The method according to any one of claims 1 to 3, wherein the method further comprises:

   determining, by the AP based on first information, that the STA needs to send the first frame to the AP, wherein the first information comprises at least one of the following information: a distance between the AP and the STA, a power consumption requirement, a sensitivity requirement, interference strength, a data amount, a modulation order, and a signal-to-noise ratio; and

sending, by the AP, a trigger frame to the STA, wherein the trigger frame is used for triggering the STA to send the first frame.

5. The method according to claim 4, wherein the method further comprises:
determining, by the AP based on second information, power of the plurality of HELTF symbols to be sent, wherein the trigger frame is further used for indicating the power of the plurality of HELTF symbols to be sent, and the second information comprises at least one of the following information: the distance between the AP and the STA, the power consumption requirement, the sensitivity requirement, the interference strength, the data amount, the modulation order, and the signal-to-noise ratio.

6. The method according to claim 4 or 5, wherein the method further comprises:
determining, by the AP, the quantity of the HELTF symbols in the first frame based on third information, wherein the trigger frame is further used for indicating the quantity of the HELTF symbols, and the third information comprises at least one of the following information: the distance between the AP and the STA, the power consumption requirement, the sensitivity requirement, the interference strength, the data amount, the modulation order, and the signal-to-noise ratio.

7. The method according to any one of claims 4 to 6, wherein the method further comprises:
determining, by the AP, periodicities of the plurality of HELTF symbols based on fourth information, wherein the trigger frame is further used for indicating the periodicities of the plurality of HELTF symbols, and the fourth information comprises at least one of the following information: the distance between the AP and the STA, the power consumption requirement, the sensitivity requirement, the interference strength, the data amount, the modulation order, and the signal-to-noise ratio.

8. The method according to any one of claims 4 to 7, wherein the trigger frame is further used for indicating at least one of the following information: the periodicities of the plurality of HELTF symbols, the power of the plurality of HELTF symbols, the quantity of the plurality of HELTF symbols, and the quantity of spatial streams.

9. A method for determining a frequency offset, comprising:
sending, by a station STA, a first frame to an access point AP, wherein the first frame is trigger-based, the first frame comprises a plurality of channel estimation training sequence HELTF symbols, the plurality of HELTF symbols comprise a first HELTF symbol and a second HELTF symbol, training data on the first HELTF symbol and training data on the second HELTF symbol are the same or opposite, and the first HELTF symbol and the second HELTF symbol are used for determining a frequency offset value between the AP and the STA.

10. The method according to claim 9, wherein a quantity of the plurality of HELTF symbols is greater than a quantity of spatial streams between the AP and the STA, and the plurality of HELTF symbols are further used for determining channel information between the AP and the STA.

11. The method according to claim 9 or 10, wherein periodicities of at least two HELTF symbols among the plurality of HELTF symbols are different.

12. The method according to any one of claims 9 to 11, wherein the method further comprises:
receiving, by the STA, a trigger frame from the AP, wherein the trigger frame is used for triggering the STA to send the first frame, and the trigger frame is further used for indicating at least one of the following information: periodicities of the plurality of HELTF symbols, power of the plurality of HELTF symbols, the quantity of the plurality of HELTF symbols, and the quantity of spatial streams.

13. An access point, comprising a transceiver unit and a processing unit coupled to the transceiver unit, wherein

the transceiver unit is configured to receive a first frame sent by a station STA, wherein the first frame is trigger-based, the first frame comprises a plurality of channel estimation training sequence HELTF symbols, the plurality of HELTF symbols comprise a first HELTF symbol and a second HELTF symbol, and training data on the first HELTF symbol and training data on the second HELTF symbol are the same or opposite; and
the processing unit is configured to determine a frequency offset value between the AP and the STA based on the first HELTF symbol and the second HELTF symbol.

14. The access point according to claim 13, wherein a quantity of the plurality of HELTF symbols is greater than a quantity of spatial streams between the AP and the STA, the plurality of HELTF symbols are further used for determining channel information between the AP and the STA, and the processing unit is further configured to:
determine the channel information based on the plurality of HELTF symbols.

15. The access point according to claim 13 or 14, wherein periodicities of at least two HELTF symbols among the plurality of HELTF symbols are different.

16. The access point according to any one of claims 13 to 15, wherein the processing unit is further configured to determine, based on first information, that the STA needs to send the first frame to the AP, wherein the first information comprises at least one of the following information: a distance between the AP and the STA, a power consumption requirement, a sensitivity requirement, interference strength, a data amount, a modulation order, and a signal-to-noise ratio; and
the transceiver unit is further configured to send a trigger frame to the STA, wherein the trigger frame is used for triggering the STA to send the first frame.

17. The access point according to claim 16, wherein the processing unit is further configured to determine, based on second information, power of the plurality of HELTF symbols to be sent, wherein the trigger frame is further used for indicating the power of the plurality of HELTF symbols to be sent, and the second information comprises at least one of the following information: the distance between the AP and the STA, the power consumption requirement, the sensitivity requirement, the interference strength, the data amount, the modulation order, and the signal-to-noise ratio.

18. The access point according to claim 16 or 17, wherein the processing unit is further configured to determine the quantity of the HELTF symbols in the first frame based on third information, wherein the trigger frame is further used for indicating the quantity of the HELTF symbols, and the third information comprises at least one of the following information: the distance between the AP and the STA, the power consumption requirement, the sensitivity requirement, the interference strength, the data amount, the modulation order, and the signal-to-noise ratio.

19. The access point according to any one of claims 16 to 18, wherein the processing unit is further configured to determine periodicities of the plurality of HELTF symbols based on fourth information, wherein the trigger frame is further used for indicating the periodicities of the plurality of HELTF symbols, and the fourth information comprises at least one of the following information: the distance between the AP and the STA, the power consumption requirement, the sensitivity requirement, the interference strength, the data amount, the modulation order, and the signal-to-noise ratio.

20. The access point according to any one of claims 16 to 19, wherein the trigger frame is further used for indicating at least one of the following information: the periodicities of the plurality of HELTF symbols, the power of the plurality of HELTF symbols, the quantity of the plurality of HELTF symbols, and the quantity of spatial streams.

21. A station, comprising a transceiver unit and a processing unit coupled to the transceiver unit, wherein

the processing unit is configured to generate a first frame, wherein the first frame is trigger-based, the first frame comprises a plurality of channel estimation training sequence HELTF symbols, the plurality of HELTF symbols comprise a first HELTF symbol and a second HELTF symbol, training data on the first HELTF symbol and training data on the second HELTF symbol are the same or opposite, and the first HELTF symbol and the second HELTF symbol are used for determining a frequency offset value between an AP and the STA; and
the transceiver unit is configured to send the first frame to the access point AP.

22. The station according to claim 21, wherein a quantity of the plurality of HELTF symbols is greater than a quantity of spatial streams between the AP and the STA, and the plurality of HELTF symbols are further used for determining channel information between the AP and the STA.

23. The station according to claim 21 or 22, wherein periodicities of at least two HELTF symbols among the plurality of HELTF symbols are different.

24. The station according to any one of claims 21 to 23, wherein the transceiver unit is further configured to receive a trigger frame from the AP, wherein the trigger frame is used for triggering the STA to send the first frame, and the trigger frame is further used for indicating at least one of the following information: periodicities of the plurality of HELTF symbols, power of the plurality of HELTF symbols, the quantity of the plurality of HELTF symbols, and the quantity of spatial streams.

25. A communication apparatus, comprising at least one processor, wherein the at least one processor is configured to execute a computer program stored in a memory, so that the apparatus implements the method according to any one of claims 1 to 8 or claims 9 to 12.

**26.** A computer-readable storage medium, comprising a computer program, wherein when the computer program is run on a computer, the computer is enabled to perform the method according to any one of claims 1 to 8 or claims 9 to 12.

**27.** A computer program product, wherein when the computer program product is run on a computer, the computer is enabled to perform the method according to any one of claims 1 to 8 or claims 9 to 12.

**28.** A chip system, comprising a processor, configured to call a computer program from a memory and run the computer program, to enable a communication device equipped with the chip system to perform the method according to any one of claims 1 to 8 or claims 9 to 12.

**29.** A communication apparatus, comprising a unit or module configured to perform the method according to any one of claims 1 to 8 or claims 9 to 12.

(a)

(b)

FIG. 1

FIG. 2

FIG. 3

| AP | | STA |
|---|---|---|

S450: Determine whether the STA needs to send a first frame to the AP

S460: Determine power of a plurality of HELTF symbols to be sent

S470: Determine a quantity of the plurality of HELTF symbols to be sent

S480: Determine periodicities of the plurality of HELTF symbols to be sent

S410: Send a trigger frame

S420: Send the first frame

S430: Determine a frequency offset value between the AP and the STA

S440: Determine channel information between the AP and the STA

FIG. 4

EP 4 404 516 A1

| 8 μs | 8 μs | 4 μs | 4 μs | 8 μs | 8 μs | | | | | |
|------|------|------|------|------|------|--|--|--|--|--|
| L-STF | L-LTF | L-SIG | RL-SIG | HE-SIG-A | HESTF | HELTF | −HELTF | HELTF | HELTF | Data | PE |
| | | | | | | HELTF | HELTF | −HELTF | −HELTF | | |

FIG. 5

EP 4 404 516 A1

| 8 µs | 8 µs | 4 µs | 4 µs | 8 µs | 8 µs | | | | | | |
|------|------|------|------|------|------|------|------|------|------|------|------|
| L-STF | L-LTF | L-SIG | RL-SIG | HE-SIG-A | HESTF | HELTF | –HELTF | HELTF | –HELTF | Data | PE |
| | | | | | | HELTF | HELTF | HELTF | HELTF | | |

FIG. 6

| Processing unit | | Transceiver unit |

FIG. 7

| Processing unit | | Transceiver unit |

FIG. 8

## INTERNATIONAL SEARCH REPORT

| | International application No. |
|---|---|
| | **PCT/CN2021/122102** |

**A.    CLASSIFICATION OF SUBJECT MATTER**

H04L 27/00(2006.01)i

According to International Patent Classification (IPC) or to both national classification and IPC

**B.    FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT; CNKI; WPI; EPODOC; IEEE: 接入点, AP, 站点, STA, 帧, 训练序列, HELTF, LTF, 相同, 相反, 估计, 频偏, 频率偏移, 触发, 调度, frame, training sequence, estimate, frequency offset, trigger, schedule, same, opposite

**C.    DOCUMENTS CONSIDERED TO BE RELEVANT**

| Category* | Citation of document, with indication, where appropriate, of the relevant passages | Relevant to claim No. |
|---|---|---|
| X | CN 113452635 A (HUAWEI TECHNOLOGIES CO., LTD.) 28 September 2021 (2021-09-28) description, paragraphs [0105]-[0318] | 1-29 |
| X | CN 107078880 A (INTEL CORP.) 18 August 2017 (2017-08-18) description, paragraphs [0019]-[0104] | 1-29 |
| A | US 2014334420 A1 (LG ELECTRONICS INC.) 13 November 2014 (2014-11-13) entire document | 1-29 |
| A | US 10243711 B1 (MARVELL INTERNATIONAL LTD.) 26 March 2019 (2019-03-26) entire document | 1-29 |

☐ Further documents are listed in the continuation of Box C.       ☑ See patent family annex.

```
*    Special categories of cited documents:
"A"  document defining the general state of the art which is not considered
     to be of particular relevance
"E"  earlier application or patent but published on or after the international
     filing date
"L"  document which may throw doubts on priority claim(s) or which is
     cited to establish the publication date of another citation or other
     special reason (as specified)
"O"  document referring to an oral disclosure, use, exhibition or other
     means
"P"  document published prior to the international filing date but later than
     the priority date claimed
```
```
"T"  later document published after the international filing date or priority
     date and not in conflict with the application but cited to understand the
     principle or theory underlying the invention
"X"  document of particular relevance; the claimed invention cannot be
     considered novel or cannot be considered to involve an inventive step
     when the document is taken alone
"Y"  document of particular relevance; the claimed invention cannot be
     considered to involve an inventive step when the document is
     combined with one or more other such documents, such combination
     being obvious to a person skilled in the art
"&"  document member of the same patent family
```

| Date of the actual completion of the international search | Date of mailing of the international search report |
|---|---|
| **11 April 2022** | **26 April 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/122102**

| Patent document cited in search report | | | Publication date (day/month/year) | Patent family member(s) | | | Publication date (day/month/year) |
|---|---|---|---|---|---|---|---|
| CN | 113452635 | A | 28 September 2021 | WO | 2021190527 | A1 | 30 September 2021 |
| CN | 107078880 | A | 18 August 2017 | US | 2017338899 | A1 | 23 November 2017 |
| | | | | WO | 2016081151 | A1 | 26 May 2016 |
| | | | | DE | 102015116751 | A1 | 19 May 2016 |
| | | | | US | 2016142158 | A1 | 19 May 2016 |
| US | 2014334420 | A1 | 13 November 2014 | WO | 2013085289 | A1 | 13 June 2013 |
| | | | | KR | 20140109374 | A | 15 September 2014 |
| US | 10243711 | B1 | 26 March 2019 | US | 9935794 | B1 | 03 April 2018 |

Form PCT/ISA/210 (patent family annex) (January 2015)